# EUROPEAN PATENT SPECIFICATION

(11) **EP 3 653 553 B1**
(45) Date of publication and mention of the grant of the patent: **06.10.2021**
(21) Application number: 19208520.7
(22) Date of filing: 12.11.2019
(51) Int. Cl.: B65H 63/00, B65H 63/036

(54) **PRODUCTION VOLUME SIMULATION APPARATUS AND PREDICTED PRODUCTION VOLUME CALCULATION METHOD**
VORRICHTUNG ZUR SIMULATION DES PRODUKTIONSVOLUMENS UND VERFAHREN ZUR BERECHNUNG DES VORHERGESAGTEN PRODUKTIONSVOLUMENS
APPAREIL DE SIMULATION DE VOLUME DE PRODUCTION ET PROCÉDÉ DE CALCUL DU VOLUME DE PRODUCTION PRÉVU

(30) Priority: 19.11.2018 JP 2018216540
(43) Date of publication of application: 20.05.2020
(73) Proprietor: Murata Machinery, Ltd., Kyoto-shi, Kyoto 601-8326 (JP)
(72) Inventor: HIRAI, Katsuhisa, Kyoto, 612-8686 (JP)
(74) Representative: Hoffmann Eitle

(56) References cited:
- EP-A1- 2 805 907
- EP-A1- 3 290 371
- EP-A1- 3 409 626
- EP-A2- 1 186 977

## Description

### BACKGROUND OF THE INVENTION

### 1. Field of the Invention

The present invention relates to a production volume simulation apparatus and a predicted production volume calculation method capable of simulating a production volume of packages formed by a yarn winding machine.

### 2. Description of the Related Art

An automatic winder is used to form packages by unwinding a yarn wound on yarn supplying bobbins (spinning bobbins formed in a ring spinning machine) and winding the yarn onto respective core tubes. In such an automatic winder, as disclosed in, for example, Japanese Patent Application Laid-Open No. 2002-087703, a technology that displays the actual production volume of the packages for a user to allow the user to easily grasp the actual production volume is known.

Conventionally, a predicted production volume, which is a production volume of the packages to be formed from the current point in time, is calculated by each user based on his/her experience. However, the production volume of the packages varies depending on various factors such as a count, winding speed, and machine efficiency. Therefore, it is difficult to accurately calculate the predicted production volume. Also, different users may use different calculation methods (for example, calculation formula) to calculate the predicted production volume of the packages. However, it is desired that there are no personal differences among users, and any user can grasp the production volume predicted accurately.

### SUMMARY OF THE INVENTION

In view of the above discussion, one object of the present invention is to provide a production volume simulation apparatus and a predicted production volume calculation method that can calculate with a high accuracy a predicted production volume of packages formed by a yarn winding machine and allow a user to easily grasp the predicted production volume.

A production volume simulation apparatus according to one aspect of the present invention is provided corresponding to a yarn winding machine equipped with a plurality of winding units each having a yarn feeding device that supplies a yarn, a winding device that winds the yarn supplied from the yarn feeding device to form a package, and a yarn defect detecting device that detects at a location between the yarn feeding device and the winding device a yarn defect that is a defective portion included in the yarn and determines whether to remove the yarn defect based on a set clearing condition. The production volume simulation apparatus includes a storage section that stores therein operation data of the winding units; a predicted production volume calculating section that calculates a predicted production volume of the packages formed by the winding units by using the operation data stored in the storage section; a displaying section that displays the predicted production volume calculated by the predicted production volume calculating section; and a removed yarn defect input receiving section that receives a changed number of removed yarn defects as a simulatable item. The predicted production volume calculating section, when the removed yarn defect input receiving section receives the changed number of removed yarn defects, calculates a winding speed for simulation based on the changed number of removed yarn defects and calculates the predicted production volume based on the calculated winding speed for simulation.

A predicted production volume calculation method according to another aspect of the present invention is implemented by a production volume simulation apparatus provided corresponding to a yarn winding machine equipped with a plurality of winding units each having a yarn feeding device that supplies a yarn, a winding device that winds the yarn supplied from the yarn feeding device to form a package, and a yarn defect detecting device that detects at a location between the yarn feeding device and the winding device a yarn defect that is a defective portion included in the yarn and determines whether to remove the yarn defect based on a set clearing condition. The predicted production volume calculation method includes storing operation data of the winding units; calculating a predicted production volume of the packages formed by the winding units by using the operation data stored at the storing; and receiving a changed number of removed yarn defects as a simulatable item. The calculating a predicted production volume includes calculating a winding speed for simulation and calculating a predicted production volume that are executed after receiving the changed number of removed yarn defects at the receiving a changed number of removed yarn defects. The calculating a winding speed for simulation includes calculating the winding speed for simulation based on the changed number of removed yarn defects. The calculating a predicted production volume includes calculating the predicted production volume based on the winding speed for simulation calculated at the calculating a winding speed for simulation.

With the technique disclosed in the present invention, the predicted production volume of the packages formed by the yarn winding machine can be calculated with a high accuracy and the user can easily grasp the predicted production volume.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a front view of an automatic winder according to one embodiment of the present invention.
FIG. 2 is a control block diagram of the automatic winder shown in FIG. 1.
FIG. 3 depicts an example of a clearing condition setting screen used in the embodiment.
FIG. 4 depicts an example of a simulation screen used in the embodiment and shows a basic state.
FIG. 5 depicts another example of the simulation screen according to the embodiment and shows a situation in which numerical values of simulatable items have been input.
FIG. 6 depicts another example of the simulation screen according to the embodiment and shows the changed clearing conditions .

### DETAILED DESCRIPTION

Exemplary embodiments of the present invention will be explained below with reference to the drawings. In the drawings, the same reference symbol will be attached to the same or similar structural components, and the overlapping explanation thereof will be omitted.

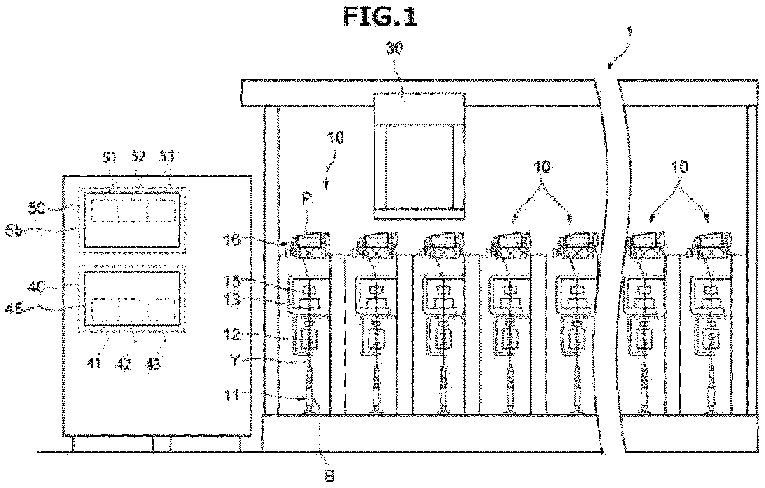

The production volume simulation apparatus according to one embodiment is used to perform simulation of a production volume of packages P formed by an automatic winder (yarn winding machine) 1 shown in FIG. 1.

### Configuration of Automatic Winder

As shown in FIG. 1, the automatic winder 1 includes a plurality of winding units 10 each of which forms a package P from a yarn Y wound on a yarn supplying bobbin B, a doffing device 30 that doffs the package P, a main controller 40 that controls the winding units 10 and the doffing device 30, and a clearer host control device 50.

### 1. Winding Unit

The winding unit 10 includes a yarn feeding device 11, a tension applying device 12, a yarn joining device 13, a yarn defect detecting device 15 (hereinafter, may be called as a "clearer"), and a winding device 16. These structural components are arranged in this order from the upstream side toward the downstream side in the traveling direction of the yarn Y.

The yarn feeding device 11 is a device that supports the yarn supplying bobbin B used as a yarn wound member. The yarn Y is unwound from the yarn supplying bobbin B and supplied to the winding device 16. That is, the yarn feeding device 11 is a device that supplies the yarn Y.

The tension applying device 12 is a device that applies a predetermined tension to the yarn Y that is traveling from the yarn feeding device 11 toward the winding device 16.

The yarn joining device 13 is a device that joins the yarn ends of the yarn Y that is disconnected for some reason. The yarn Y can be disconnected, for example, when the yarn Y is cut because a defect was detected in the yarn.

The clearer 15 monitors, at a location between the yarn feeding device 11 and the winding device 16, a state of the yarn Y that is traveling from the yarn feeding device 11 to the winding device 16, and detects whether there is a yarn defect that is a defective part of the yarn Y. The yarn defect can be, for example, a part of the yarn at which the thickness of the yarn Y (corresponding to a diameter or a fiber amount of the yarn Y) is abnormal (for example, Nep N, Short S, Long L, Thin T, etc.) . Also, the yarn defect can be a part of the yarn in which a foreign substance is mixed in the yarn Y. The clearer 15 determines whether the detected yarn defect should be removed based on a set clearing condition. When the clearer 15 determines that the yarn defect should be removed, the clearer 15 causes a cutter to cut the yarn Y to remove the yarn defect from the yarn Y. The cutter can be included in the clearer 15 or can be provided separately from the clearer 15.

The clearer 15 transmits data about the yarn defect (yarn defect data) to the clearer host control device 50. The yarn defect data is, for example, information about each yarn defect and the number of removed yarn defects. The information about the yarn defect is, for example, the thickness and the length of each yarn defect. The number of removed yarn defects is the number of removed yarn defects calculated for each type of the yarn defect (for example, Nep N, Short S, Long L, and Thin T). The number of removed yarn defects for each type of the yarn defect is transmitted from each clearer 15 to the clearer host control device 50. On the other hand, the clearing condition is transmitted from the clearer host control device 50 to each clearer 15.

The winding device 16 is a device that forms the package P by winding the yarn Y supplied from the yarn feeding device 11. In some known winding units, the yarn feeding device proactively supplies the yarn to the winding device. In other know winding units, the yarn feeding device simply holds (supports) a yarn supplying bobbin and the winding device includes a configuration, such as a motor, that pulls the yarn from the yarn supplying bobbin of the yarn feeding device. In the present specification, the verb "supply" used in connection with the yarn includes the proactive supply of the yarn by the yarn feeding device to the winding device as well as the pulling of the yarn from the yarn supplying bobbin by the winding device.

### 2. Doffing Device

The doffing device 30 is a device that doffs the package P formed by a certain winding unit 10. One doffing device 30 is provided corresponding to a plurality of the winding units 10. Thus, one automatic winder 1 is provided with one or a plurality of the doffing devices 30. The doffing device 30 can travel along a direction in which the winding units 10 are arranged. The doffing device 30 puts the doffed package P at a predetermined position (for example, on a conveyor belt provided on the rear side of the machine).

### 3. Main Controller

The main controller (the production volume simulation apparatus) 40 is installed at one end of the automatic winder 1.

The main controller 40 includes a storage section 41, an arithmetic section 42, a displaying and input receiving section 45, and a display control section 43. The storage section 41, the arithmetic section 42, the displaying and input receiving section 45, and the display control section 43 of the main controller 40 may be called below as a first storage section 41, a first arithmetic section ("predicted production volume calculating section" according to the present invention) 42, a first displaying and input receiving section ("displaying section" and "removed yarn defect input receiving section" according to the present invention) 45, and a first display control section 43, respectively.

The first displaying and input receiving section 45 is configured by a touch screen. Hereinafter, the first displaying and input receiving section 45 of the main controller 40 may be called as a first touch screen 45.

The first storage section 41, the first arithmetic section 42, and the first display control section 43 are configured by electronic control units that include, for example, CPU [Central Processing Unit], ROM [Read Only Memory], RAM [Random Access Memory], EEPROM [Electrically Erasable Programmable Read Only Memory], and other storage devices.

The main controller 40 transmits and receives data to and from the clearer host control device 50. The main controller 40 receives at least the total value of all the number of removed yarn defects stored in the clearer host control device 50. That is, the main controller 40 can receive other data stored in the clearer host control device 50. The total value of the number of removed yarn defects can be, for example, a total value (ALL) of the number of removed yarn defects related to a thickness abnormality. Alternatively, the total value of the number of removed yarn defects is the total value of the number of removed yarn defects of all types including the yarn defects that are not related to the thickness abnormality.

The main controller 40 performs the simulation of the production volume of the packages P formed by the automatic winder 1. That is, the main controller 40 functions as the production volume simulation apparatus according to the present embodiment. By performing such a simulation, the total weight of the packages P formed from the current point in time until a later-explained simulation time (or a preset predetermined time) elapses is calculated as a predicted production volume. In such simulation, the predicted production volume can be calculated for each lot. That is, a plurality of the winding units 10 that wind the yarn Y of the same lot are made one group, and the predicted production volume is calculated for each of such groups. Note that, the unit for calculating the production volume needs not be the weight of the yarn. For example, the production volume can be calculated based on the length of the yarn or the number of packages.

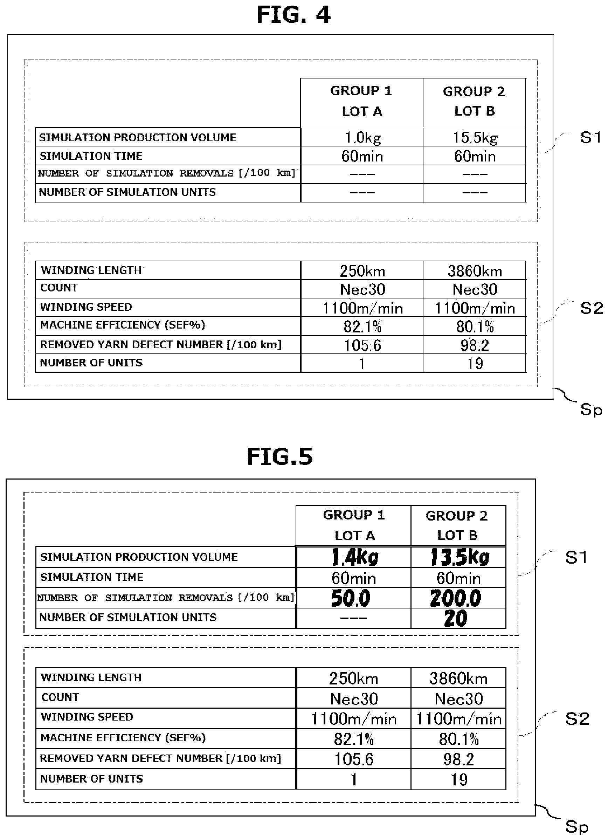

The first touch screen 45 can display a simulation screen Sp as shown in FIGS. 4 to 6. The simulation screen Sp includes a simulation area S1 and an operation data display area S2. The first touch screen 45 is monitored and operated by the user. By touching an appropriate area on the first touch screen 45, the user can input a new value or change the current value of a simulatable item displayed in the simulation area S1. In this way, the first touch screen 45 is a device that receives input of a new value or a changed value of the simulatable item.

The simulation production volume and a plurality of the simulatable items are displayed in the simulation area S1.

The simulation production volume is the predicted production volume calculated as a result of performing the simulation according to the present embodiment.

In the present embodiment, the simulatable item can be one or more among "simulation time", "number of simulation removals", and "number of simulation units".

One or more of the items in the operation data can be changed when performing the simulation. In the present embodiment, it is assumed that the number of units and the number of removed yarn defects in the operation data can be changed as the simulatable item.

The "simulation time" is the time period for which the production volume is to be calculated. The first arithmetic section 42 calculates, as the predicted production volume, the volume of the packages P formed from the present (current point in time) until the simulation time elapses. For example, when "120 minutes" is input as the simulation time, the production volume of the packages that will be formed from the current point in time until 120 minutes elapse is calculated as the predicted production volume. The unit of the simulation time is not limited to minute but can be any of day, hour, and second. Alternatively, the first arithmetic section 42 calculates the predicted production volume of the packages P formed from a desired start time until the simulation time elapses.

Also, the preset predetermined time is stored in the first storage section 41 as a default time for calculating the predicted production volume. If the preset simulation time is not changed by the user, the first arithmetic section 42 calculates as the predicted production volume the volume of the packages P formed from the current point in time until the default time elapses. FIGS. 4 to 6 show a state in which the simulation time has been set to 60 minutes.

The "number of simulation units" is the total number of the winding units 10 for which the simulation is to be performed.

The "number of simulation removals" is the number of removed yarn defects. In the present embodiment, the number of removed yarn defects per predetermined unit length of the yarn Y is used as the number of simulation removals. For example, the number of simulation removals is the number of removed yarn defects per 100 km of the yarn. The number of simulation removals may have the same meaning as the predicted removal number that appears below.

The simulation production volume and a plurality of simulatable items are displayed for each lot. A value of each simulatable item can be input newly or changed for each lot. The user can touch an appropriate area on the first touch screen 45 to input a desired new numerical value or change the current value to a desired numerical value for each lot of the "simulation time", the "number of simulation units", and the "number of simulation removals" that are displayed in the simulation area S1.

The operation data display area S2 displays a plurality of types of the operation data. For example, as the operation data, a winding length, a count, a winding speed, machine efficiency, removed yarn defect number (removal number of the yarn defects), and the number of units (number of actual operating units) are displayed. The operation data is displayed for each lot.

The count, the winding speed, and the number of units in the operation data mentioned above are equal to the set values set as the winding conditions. The winding length, the machine efficiency, and the removed yarn defect number in the operation data are values that change as the automatic winder 1 operates. The machine efficiency is "a ratio (SEF%) of a winding time in which the winding device 16 winds the yarn Y to a blower operation time". The value of the machine efficiency changes when the number of removed yarn defects changes, for example. However, the machine efficiency can be other than the "ratio (SEF%) of the winding time in which the winding device 16 winds the yarn Y to the blower operation time". The blower generates a suction airflow in a suction member (a yarn catching member or the like) provided in the winding unit 10. The blower is installed at one end of the automatic winder 1, for example.

The first storage section 41 stores therein the operational data. Note that the stored operation data and the operation data displayed on the simulation screen Sp are not limited to the examples described above.

The first arithmetic section 42 calculates the predicted production volume based on the operation data stored in the first storage section 41.

When a value of at least one of the simulatable items (hereinafter, may be called as a "simulation value") is newly input or changed by the user by using the first touch screen 45, the first arithmetic section 42 calculates the predicted production volume based on the operation data stored in the first storage section 41 and the simulation value changed by the user.

When the clearing condition is changed by the user by using a second touch screen 55 explained later, the first arithmetic section 42 calculates the predicted production volume based on the operation data stored in the first storage section 41 and the number of removed yarn defects corresponding to the changed clearing condition.

The calculation of the predicted production volume can be performed by using the operation data of a target lot after winding the yarn Y of a specified amount (for example, 100 km) or more in the target lot. That is, a preset lower limit volume that prohibits the simulation of the predicted production volume is determined in advance. If the preset lower limit volume, which is the volume of winding required to calculate the predicted production volume, has not been reached, an alert to that effect is displayed on the first touch screen 45.

The first display control section 43 displays, on the simulation screen Sp, the predicted production volume calculated by the first arithmetic section 42 simultaneously with the operation data. For example, from the initial state of the simulation screen Sp shown in FIG. 4, when the number of simulation removals and the number of simulation units are input as shown in FIG. 5, and the predicted production volume is calculated, the first display control section 43 displays, as shown in FIG. 5, the calculated predicted production volume on the simulation screen Sp in a manner that allows understanding of the relation between the calculated predicted production volume and the operation data.

### 4. Clearer Host Control Device

The clearer host control device 50 is a device that manages a plurality of the clearers 15 in an integrated manner. Each clearer 15 detects a yarn defect in a corresponding winding unit 10 as explained above. The clearer host control device 50 is installed at one end of the automatic winder 1.

The clearer host control device 50 includes a storage section 51, an arithmetic section 52, a displaying and input receiving section 55, and a display control section 53. The storage section 51, the arithmetic section 52, the displaying and input receiving section 55, and the display control section 53 of the clearer host control device 50 may be called below as a second storage section 51, a second arithmetic section ("predicted removal number calculating section" according to the present invention) 52, a second displaying and input receiving section ("clearing condition input receiving section" according to the present invention) 55, and a second display control section 53, respectively.

The second displaying and input receiving section 55 is configured by the second touch screen 55. Hereinafter, the second displaying and input receiving section 55 of the clearer host control device 50 may be called as the second touch screen 55. The first touch screen 45 and the second touch screen 55 are installed side by side at one end of the automatic winder 1.

The second storage section 51, the second arithmetic section 52, and the second display control section 53 are configured by electronic control units that include, for example, CPU [Central Processing Unit], ROM [Read Only Memory], RAM [Random Access Memory], EEPROM [Electrically Erasable Programmable Read Only Memory], and other storage devices.

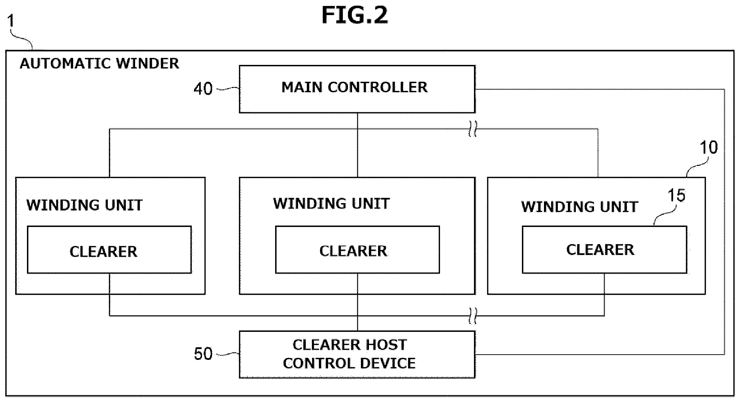

As shown in FIG. 2, the clearer host control device 50 communicates with each clearer 15, receives the yarn defect data held by each clearer 15 from each clearer 15, and transmits the clearing condition to each clearer 15. Further, the clearer host control device 50 communicates with the main controller 40 and can transmit data (for example, the number of removed yarn defects) held by the clearer host control device 50 to the main controller 40. When the clearing condition is changed, the clearer host control device 50 transmits to the main controller 40 the total value (total removal number) of the number of removed yarn defects calculated according to the changed clearing condition.

The second arithmetic section 52 calculates the actual and predicted values of the number of removed yarn defects. The calculation here includes a count. For example, the second arithmetic section 52 adds the number of removed yarn defects received from each clearer 15 for each lot and for each type of the yarn defect. All types of the number of removed yarn defects are added together for each lot to obtain the total removal number. The total removal number is stored in the second storage section 51.

The second storage section 51 stores therein the set clearing condition, the yarn defect data received from each clearer 15 (for example, yarn defect data indicating the length and the thickness of each yarn defect), and the total removal number of yarn defects calculated by the second arithmetic section 52.

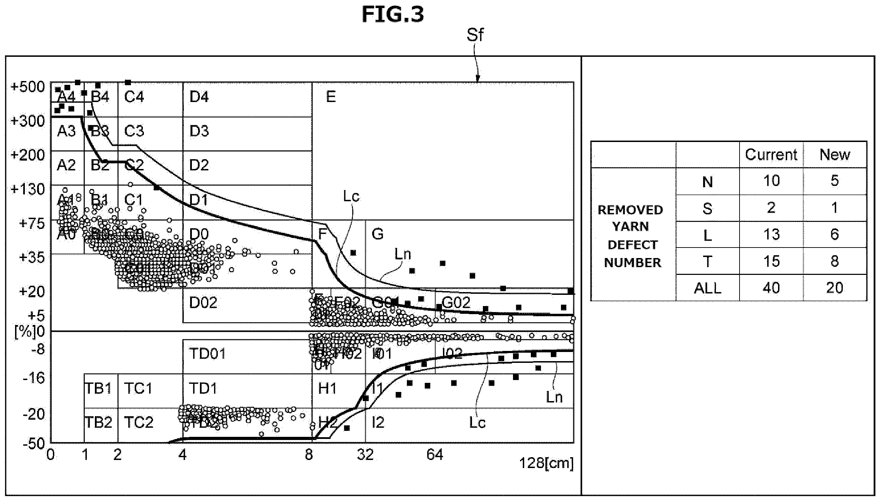

A clearing condition setting screen shown in FIG. 3 is displayed on the second touch screen 55. In the clearing condition setting screen, clearing limits Lc and Ln, which are the clearing conditions, are displayed in a two-dimensional field Sf together with a yarn defect distribution. Between the two clearing limits Lc and Ln, the clearing limit Lc is a clearing limit that is the currently used clearing limit and the other clearing limit Ln is the changed clearing limit. In the clearing condition setting screen, the number of removed yarn defects actually removed based on the current clearing limit Lc and the number of yarn defects that are expected to be removed based on the changed clearing limit Ln are displayed. However, it is allowable that the number of removed yarn defects is not displayed on the clearing condition setting screen.

The two-dimensional field Sf is a coordinate system in which each of the length and the thickness of the yarn defect is a coordinate axis. The length of yarn defect is plotted on the horizontal axis and the thickness of yarn defect (ratio of the actual thickness to a standard thickness of the yarn) is plotted on the vertical axis. The clearing limits Lc and Ln are boundary lines for determining whether the yarn defect detected by the clearer 15 is to be removed.

Among the yarn defects displayed in the two-dimensional field Sf, with respect to the clearing limits Lc and Ln, the yarn defects that fall in a region that is on the other side of the standard thickness side (the horizontal axis side where the yarn defect thickness is 0%) are the yarn defects that need to be removed, and the yarn defects that fall in a region on the standard thickness side are the yarn defects that are allowed to remain without being removed. As mentioned above, the yarn defect includes a yarn defect that needs to be removed and a yarn defect that is allowed to remain.

The second touch screen 55 is operated by the user when changing the clearing condition. The user can newly set the clearing condition or change the current clearing condition by operating the second touch screen 55. That is, the second touch screen 55 receives the input of the new clearing condition or a changed current clearing condition.

The second display control section 53 generates the two-dimensional field Sf and displays on the second touch screen 55 the clearing limits Lc and Ln as lines in the two-dimensional field Sf.

The second display control section 53 also determines a position of each yarn defect in the two-dimensional field Sf based on the yarn defect data stored in the second storage section 51. Thus, the yarn defect distribution is displayed on the second touch screen 55 with dots (in the present embodiment, a hollow circle and a solid square) representing the yarn defects. However, the display method of the yarn defect distribution is not limited to the dots.

As mentioned above, the number of removed yarn defects is preferably a value per predetermined unit length (for example, 100 km). However, the number of removed yarn defects can be a value per unit time or period (for example, per hour, per shift, per spinning cycle), or can be the total number of removals after the current clearing condition was set.

### A-1. When Simulation Time is Changed

A method of calculating the predicted production volume when the simulation time is changed by the user by using the first touch screen 45 will be explained below.

When the first touch screen 45 is operated by the user to newly input the simulation time, which is the simulatable item, or change the current simulation time, the first arithmetic section 42 calculates, based on the operation data stored in the first storage section 41, the predicted production volume of the packages P formed from the current point in time until the simulation time elapses.

### A-2. When Number of Simulation Units is Changed

A method of calculating the predicted production volume when the number of simulation units is changed by the user by using the first touch screen 45 will be explained below.

When the first touch screen 45 is operated by the user to newly input the number of simulation units or change the current number of simulation units, the first arithmetic section 42 uses, instead of the number of actual operating units, which is the number of units stored as the operation data, the changed number of simulation units for calculating the predicted production volume.

### A-3. When Number of Simulation Removals is Changed

A method of calculating the predicted production volume when the number of simulation removals is changed by the user by using the first touch screen 45 will be explained below in detail.

When making the present invention, the inventor of the present invention paid attention to the fact that the actual winding speed may differ greatly from the set winding speed set as the target speed (winding condition). In order to predict the production volume with a higher accuracy, the inventor found that it is not desirable to use the set winding speed (set value) as it is for the calculation of the predicted production volume.

The present invention is characterized by calculating the winding speed (hereinafter may be referred to as "winding speed for simulation") for using in the simulation of the predicted production volume. Accordingly, it is possible to calculate the predicted production volume based on the value of the winding speed that faithfully reflects the actual winding situation.

The winding speed for simulation (predicted winding speed) is calculated such that it becomes slower (smaller) as the number of removed yarn defects increases. In other words, the numerical value that increases as the number of removed yarn defects decreases is calculated as the winding speed for simulation.

The actual winding speed is affected by the number of removed yarn defects and it is generally lower than the set winding speed. In other words, as the number of removed yarn defects increases, the degree of the decrease in the actual winding speed from the set winding speed increases. The reason is that the winding operation is temporarily interrupted in order to remove the yarn defects, resulting in a stop time. The winding speed for simulation is a value averaged over the entire winding time (the total winding time for which the simulation is preformed) in consideration of the temporary winding stop time. The winding speed for simulation can also be referred to as an averaged traveling speed of the yarn Y.

In the present embodiment, the first storage section 41 stores therein a mathematical formula for calculating the winding speed for simulation such that the winding speed for simulation becomes slower (lower) as the number of removed yarn defects increases. The first arithmetic section 42 calculates the winding speed for simulation according to the increase/decrease in the number of removed yarn defects by using this mathematical formula.

The winding speed for simulation is calculated based on at least the removed yarn defect number per unit length for simulation, the actual removed yarn defect number, and the actual winding time. For the actual removed yarn defect number and the actual winding time, the values stored in the first storage section 41 as the operation data is used for calculation of the winding speed for simulation.

The winding speed for simulation is preferably calculated based on a predetermined mathematical formula that uses the number of removed yarn defects as one of the parameters. Alternatively, the winding speed for simulation can be calculated based on a predetermined table prepared with the number of removed yarn defects as one of the parameters.

If the number of simulation removals is not changed or newly entered, it is preferable to calculate the winding speed for simulation based on the actual winding time up to the current point in time, the actual package production volume, and the set count that are stored as the operation data.

The first arithmetic section 42 calculates the predicted production volume based on the calculated winding speed for simulation.

It is preferable that the first arithmetic section 42 calculates the machine efficiency for simulation (predicted efficiency) based on the changed number of simulation removals, and further calculates the predicted production volume based on the calculated machine efficiency for simulation and the winding speed for simulation. It is preferable to calculate the machine efficiency for simulation such that it decreases as the number of removed yarn defects increases.

### B. When Clearing Condition is Changed

A procedure (predicted production volume calculation method) until the predicted production volume is calculated and displayed when the clearing condition is changed by the user will be explained below.

The operation data used by the winding unit 10 is stored in the first storage section 41 at an appropriate timing (storing) . In this state, first, the user operates the second touch screen 55 of the clearer host control device 50 to change the clearing condition (receiving a changed clearing condition).

Next, the second arithmetic section 52 of the clearer host control device 50 calculates the predicted removal number as the removal number corresponding to the changed clearing condition based on the changed clearing condition (the changed clearing condition received at the receiving a changed clearing condition) and the yarn defect data (the yarn defect data that is one of the operation data stored at the storing) stored in the second storage section 51 of the clearer host control device 50 (as the operation data) (calculating a removal number).

Next, the clearer host control device 50 transmits the calculated predicted removal number to the main controller 40 (transmitting removal number).

Next, the main controller 40 receives the predicted removal number from the clearer host control device 50 (receiving a changed number of removed yarn defects). Next, the main controller 40 calculates the winding speed for simulation based on the predicted removal number (calculating a winding speed for simulation). It can be explained that, when a changed clearing condition is received at the receiving a changed clearing condition, the predicted removal number calculated at the calculating a removal number is received as a changed number of removed yarn defects at the receiving a changed number of removed yarn defects.

Then, the main controller 40 calculates the predicted production volume based on the calculated winding speed for simulation and the operation data (calculating a predicted production volume).

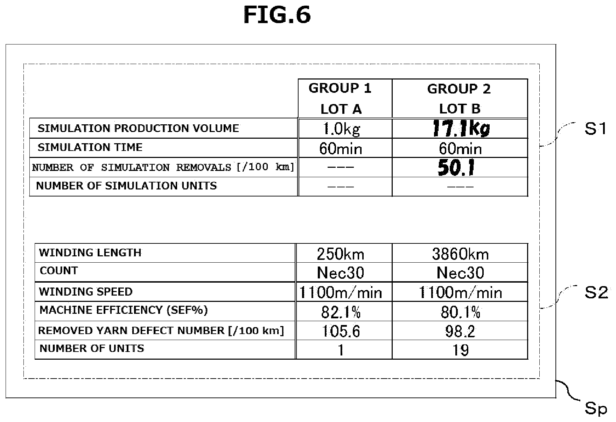

Finally, as shown in FIG. 6, the main controller 40 displays the calculated predicted production volume on the simulation screen Sp simultaneously with the operation data (displaying). In the simulation screen Sp, thus, similarly to the situation in which the number of simulation removals is changed, the predicted removal number is displayed in a column (display location) of the number of simulation removals as the changed removal number.

When the second touch screen 55 of the clearer host control device 50 is operated and the clearing condition is changed, if the first touch screen 45 of the main controller 40 displays a screen other than the simulation screen Sp, the simulation screen Sp may be displayed at any timing such as the change of the clearing condition, calculation of the predicted removal number, or transmission of the predicted removal number. That is, the display may be switched to the simulation screen Sp in synchronization (interlocking) with the change of the clearing condition.

### Advantageous Effects

According to the main controller 40 of the automatic winder 1 of the present embodiment, the predicted production volume of the packages P can be calculated with a high accuracy. Also, according to the main controller 40 of the present embodiment, the user can easily grasp the predicted production volume.

Further, the user can perform the simulation of the predicted production volume by using the simulation screen Sp displayed on the first touch screen 45.

In particular, the user can easily grasp the predicted production volume calculated with a high accuracy according to the changed clearing condition while comparing the same with the operation data. Also, because the first touch screen 45 and the second touch screen 55 are installed side by side at one end of the automatic winder 1, the user can easily grasp the predicted production volume while comparing the same with the clearing condition.

### Modification

Although one embodiment of the present invention has been described above, the embodiment of the present invention is not limited to this embodiment. For example, it is possible to change the embodiment as below.

In the above embodiment, the main controller 40 and the clearer host control device 50 are installed at one end of the automatic winder 1; however, their installation positions are not limited to this. For example, these devices can be installed in a central part or one of them can be installed at the other end.

In the above embodiment, the main controller 40 calculates the predicted production volume; however, the device that calculates the predicted production volume is not limited to the main controller 40. For example, when a host control device that can communicate with a plurality of the automatic winders 1 and integrally manages those automatic winders 1 is provided, this host control device can function as the production volume simulation apparatus and calculate the predicted production volume.

In the above embodiment, the first touch screen 45 of the main controller 40 displays the production volume; however, the displaying section (displaying device) that displays the production volume is not limited to the first touch screen 45. For example, the production volume can be displayed on the second touch screen 55 of the clearer host control device 50. The displaying section can be constituted by a simple displaying device instead of the touch screen and the production volume can be displayed on this simple displaying device.

It is allowable to configure the main controller 40 and the clearer host control device 50 such that they do not communicate with each other. Also, the displaying section of the main controller 40 and the displaying section of the clearer host control device 50 can be one (common) displaying section instead of separate displaying sections. Furthermore, the main controller 40 and the clearer host control device 50 may be one (common) control device instead of separate control devices. When this configuration is adopted, for example, the first arithmetic section 42 of the main controller 40 and the second arithmetic section 52 of the clearer host control device 50 can be constituted by one arithmetic section (for example, one CPU) .

Further, the predicted production volume can be displayed on a displaying device other than the displaying section of the main controller 40 and the displaying section of the clearer host control device 50. At this time, it is allowable that the control device having the arithmetic section that calculates the production volume transmits the information about the calculated production volume to the displaying device (for example, a displaying device of a mobile terminal) and this displaying device is caused to display the production volume.

The predicted production volume is preferably calculated for each lot. However, the calculation is not limited to each lot. The predicted production volume is preferably calculated for each arbitrary group (for example, for each lot, each shift, or each machine). When the host control device calculates the predicted production volume, it is preferable that the predicted production volume is calculated for the same lot or for each predetermined period for a plurality of the automatic winders 1.

The yarn wound member supported by the yarn feeding device 11 is not limited to the yarn supplying bobbin B but can be a yarn feeding package.

### Application to Air Spinning Machine

The production volume simulation apparatus according to the present invention can be applied to a yarn winding machine other than the automatic winder 1 such as a pneumatic spinning frame.

The pneumatic spinning frame includes a plurality of spinning units (winding units) and one or more yarn joining carriers. Each spinning unit includes a yarn feeding device capable of supplying the yarn, a winding device that winds the yarn supplied from the yarn feeding device to form a package, and a yarn defect detecting device that detects a yarn defect at a location between the yarn feeding device and the winding device and determines whether the yarn defect should be removed based on a set clearing condition. The yarn feeding device is a drafting device that drafts a fiber bundle and a spinning device that twists the drafted fiber bundle by the action of an airflow to form a yarn. The yarn joining carrier can travel along a direction in which the plurality of the spinning units is arranged side-by-side, and stops at a position corresponding to a predetermined spinning unit to perform yarn joining in that spinning unit.

A production volume simulation apparatus according to one aspect of the present invention is provided corresponding to a yarn winding machine equipped with a plurality of winding units each having a yarn feeding device that supplies a yarn, a winding device that winds the yarn supplied from the yarn feeding device to form a package, and a yarn defect detecting device that detects at a location between the yarn feeding device and the winding device a yarn defect that is a defective portion included in the yarn and determines whether to remove the yarn defect based on a set clearing condition. The production volume simulation apparatus includes a storage section that stores therein operation data of the winding units; a predicted production volume calculating section that calculates a predicted production volume of the packages formed by the winding units by using the operation data stored in the storage section; a displaying section that displays the predicted production volume calculated by the predicted production volume calculating section; and a removed yarn defect input receiving section that receives a changed number of removed yarn defects as a simulatable item. The predicted production volume calculating section, when the removed yarn defect input receiving section receives the changed number of removed yarn defects, calculates a winding speed for simulation based on the changed number of removed yarn defects and calculates the predicted production volume based on the calculated winding speed for simulation.

A predicted production volume calculation method according to another aspect of the present invention is implemented by a production volume simulation apparatus provided corresponding to a yarn winding machine. The yarn winding machine is equipped with a plurality of winding units each having a yarn feeding device that supplies a yarn, a winding device that winds the yarn supplied from the yarn feeding device to form a package, and a yarn defect detecting device that detects at a location between the yarn feeding device and the winding device a yarn defect that is a defective portion included in the yarn and determines whether to remove the yarn defect based on a set clearing condition. The predicted production volume calculation method includes storing operation data of the winding units; calculating a predicted production volume of the packages formed by the winding units by using the operation data stored at the storing; and receiving a changed number of removed yarn defects as a simulatable item. The calculating a predicted production volume includes calculating a winding speed for simulation and calculating a predicted production volume that are executed after receiving the changed number of removed yarn defects at the receiving a changed number of removed yarn defects. The calculating a winding speed for simulation includes calculating the winding speed for simulation based on the changed number of removed yarn defects. The calculating a predicted production volume includes calculating the predicted production volume based on the winding speed for simulation calculated at the calculating a winding speed for simulation.

In the above production volume simulation apparatus, the predicted production volume calculating section can calculate the winding speed for simulation such that the winding speed for simulation becomes slower as the number of removed yarn defects increases.

In the above predicted production volume calculation method, the calculating a winding speed for simulation can include calculating the winding speed for simulation such that the winding speed for simulation becomes slower as the number of removed yarn defects increases.

In the above production volume simulation apparatus, a set winding speed set as a target winding condition can be stored in the storage section as one of the operation data, and the predicted production volume calculating section can calculate a numerical value different from a numerical value of the set winding speed stored in the storage section as the winding speed for simulation.

In the above predicted production volume calculation method, the storing can include storing a set winding speed set as a target winding condition as one of the operation data, and the calculating a winding speed for simulation can include calculating a numerical value different from a numerical value of the set winding speed stored at the storing as the winding speed for simulation.

In the above production volume simulation apparatus, the storage section can store therein a mathematical formula for calculating the winding speed for simulation such that the winding speed for simulation becomes slower as the number of removed yarn defects increases, and the predicted production volume calculating section can calculate the winding speed for simulation based on the mathematical formula stored in the storage section.

In the above predicted production volume calculation method, the storing can include storing a mathematical formula for calculating the winding speed for simulation such that the winding speed for simulation becomes slower as the number of removed yarn defects increases, and the calculating a winding speed for simulation can include calculating the winding speed for simulation based on the mathematical formula stored at the storing.

The above production volume simulation apparatus can further include a clearing condition input receiving section that receives a changed clearing condition as the simulatable item; and a predicted removal number calculating section that calculates, when the clearing condition input receiving section receives the changed clearing condition, a predicted removal number of the yarn defects based on the changed clearing condition. The removed yarn defect input receiving section can receive the predicted removal number calculated by the predicted removal number calculating section as the changed number of removed yarn defects. The predicted production volume calculating section, when the removed yarn defect input receiving section receives the predicted removal number calculated by the predicted removal number calculating section as the changed number of removed yarn defects, can calculate the winding speed for simulation based on the changed number of removed yarn defects and can calculate the predicted production volume based on the winding speed for simulation.

The above predicted production volume calculation method can be implemented in the production volume simulation apparatus further including a clearing condition input receiving section that receives a changed clearing condition as the simulatable item; and a predicted removal number calculating section that calculates, when the clearing condition input receiving section receives the changed clearing condition, a predicted removal number of the yarn defects based on the changed clearing condition. The predicted production volume calculation method can further include receiving a changed clearing condition as the simulatable item; and calculating a predicted removal number based on the changed clearing condition received at the receiving a changed clearing condition and yarn defect data that is one of the operation data stored at the storing. The receiving a changed number of removed yarn defects can include, upon receiving the changed clearing condition at the receiving a changed clearing condition, receiving the predicted removal number calculated at the calculating a predicted removal number as the changed number of removed yarn defects.

In the above production volume simulation apparatus, the removed yarn defect input receiving section can be configured to receive, as the simulatable item, a changed number of winding units. The predicted production volume calculating section, when the removed yarn defect input receiving section receives the changed number of the winding units, instead of calculating the predicted production volume by using the number of the winding units stored in the storage section as the operation data, can calculate the predicted production volume by using the changed number of the winding units.

In the above predicted production volume calculation method, the receiving a changed number of removed yarn defects can include receiving, as the simulatable item, a changed number of winding units . The calculating a predicted production volume can include, when the changed number of the winding units is received at the receiving a changed number of winding units, instead of calculating the predicted production volume by using the number of the winding units stored at the storing as the operation data, calculating the predicted production volume by using the changed number of the winding units.

In the above production volume simulation apparatus, the removed yarn defect input receiving section can be configured to receive a changed simulation time as the simulatable item. The predicted production volume calculating section, when the removed yarn defect input receiving section receives the changed simulation time, can calculate the predicted production volume of the packages formed from a current point in time until the changed simulation time elapses, and when the removed yarn defect input receiving section does not receive the changed simulation time, can calculate the predicted production volume of the packages formed from the current point in time until a preset predetermined time elapses.

In the above predicted production volume calculation method, the receiving a changed number of removed yarn defects can include receiving a changed simulation time as the simulatable item. The calculating a predicted production volume can include, when the changed simulation time is received at the receiving a changed simulation time, calculating the predicted production volume of the packages formed from a current point in time until the changed simulation time elapses, and when the changed simulation time is not received at the receiving a changed simulation time, calculating the predicted production volume of the packages formed from the current point in time until a preset predetermined time elapses.

In the above production volume simulation apparatus, the predicted production volume calculating section, when the removed yarn defect input receiving section receives the changed number of removed yarn defects, can calculate a machine efficiency for simulation based on the changed number of removed yarn defects, and can calculate the predicted production volume based on the machine efficiency for simulation and the winding speed for simulation.

In the above predicted production volume calculation method, the calculating a predicted production volume can include, when the changed number of removed yarn defects is received at the receiving a changed number of removed yarn defects, calculating a machine efficiency for simulation based on the changed number of removed yarn defects, and calculating the predicted production volume based on the machine efficiency for simulation and the winding speed for simulation. In other words, in the above predicted production volume calculation method, the calculating a predicted production volume can include, when the changed number of removed yarn defects is received at the receiving a changed number of removed yarn defects, calculating a machine efficiency for simulation based on the changed number of removed yarn defects. The calculating a winding speed for simulation can include calculating the predicted production volume based on the machine efficiency for simulation calculated at the calculating a machine efficiency for simulation and the winding speed for simulation calculated at the calculating a winding speed for simulation.

In the above production volume simulation apparatus, the predicted production volume calculating section can calculate the machine efficiency for simulation such that the machine efficiency for simulation decreases as the number of removed yarn defects increases.

In the above predicted production volume calculation method, the calculating a predicted production volume (the calculating a machine efficiency for simulation) can include calculating the machine efficiency for simulation such that the machine efficiency for simulation decreases as the number of removed yarn defects increases.

In the above explanation, the meaning of "a plurality of" also includes "a predetermined number of".

Although the invention has been explained with respect to specific embodiments for a complete and clear disclosure, the appended claims are not to be thus limited but are to be construed as embodying all modifications and alternative constructions that may occur to one skilled in the art that fall within the scope of the claims.

## Claims

1. A production volume simulation apparatus (40) provided corresponding to a yarn winding machine (1) equipped with a plurality of winding units (10) each having a yarn feeding device (11) that supplies a yarn (Y), a winding device (16) that winds the yarn (Y) supplied from the yarn feeding device (11) to form a package (P), and a yarn defect detecting device (15) that detects at a location between the yarn feeding device (11) and the winding device (16) a yarn defect that is a defective portion included in the yarn (Y) and determines whether to remove the yarn defect based on a set clearing condition, comprising:
a storage section (41) that stores therein operation data of the winding units (10);
a predicted production volume calculating section (42) that calculates a predicted production volume of the packages (P) formed by the winding units (10) by using the operation data stored in the storage section (41); and
a removed yarn defect input receiving section (45) that receives a changed number of removed yarn defects as a simulatable item,
wherein the predicted production volume calculating section (42), when the removed yarn defect input receiving section (45) receives the changed number of removed yarn defects, calculates a winding speed for simulation based on the changed number of removed yarn defects and calculates the predicted production volume based on the calculated winding speed for simulation.

2. The production volume simulation apparatus (40) as claimed in Claim 1, wherein the predicted production volume calculating section (42) calculates the winding speed for simulation such that the winding speed for simulation becomes slower as the number of removed yarn defects increases.

3. The production volume simulation apparatus (40) as claimed in Claim 2, wherein
a set winding speed set as a target winding condition is stored in the storage section (41) as one of the operation data, and
the predicted production volume calculating section (42) calculates a numerical value different from a numerical value of the set winding speed stored in the storage section (41) as the winding speed for simulation.

4. The production volume simulation apparatus (40) as claimed in Claim 2 or 3, wherein
the storage section (41) stores therein a mathematical formula for calculating the winding speed for simulation such that the winding speed for simulation becomes slower as the number of removed yarn defects increases, and
the predicted production volume calculating section (42) calculates the winding speed for simulation based on the mathematical formula stored in the storage section (41).

5. The production volume simulation apparatus (40) as claimed in any one of Claims 1 to 4, further comprising:
a clearing condition input receiving section (55) that receives a changed clearing condition as the simulatable item; and
a predicted removal number calculating section (52) that calculates, when the clearing condition input receiving section (55) receives the changed clearing condition, a predicted removal number of the yarn defects based on the changed clearing condition, wherein
the removed yarn defect input receiving section (45) receives the predicted removal number calculated by the predicted removal number calculating section (52) as the changed number of removed yarn defects, and
the predicted production volume calculating section (42), when the removed yarn defect input receiving section (45) receives the predicted removal number calculated by the predicted removal number calculating section (52) as the changed number of removed yarn defects, calculates the winding speed for simulation based on the changed number of removed yarn defects and calculates the predicted production volume based on the winding speed for simulation.

6. The production volume simulation apparatus (40) as claimed in any one of Claims 1 to 5, wherein,
the removed yarn defect input receiving section (45) is configured to receive, as the simulatable item, a changed number of winding units, wherein
the predicted production volume calculating section (42), when the removed yarn defect input receiving section (45) receives the changed number of the winding units (10), instead of calculating the predicted production volume by using the number of the winding units (10) stored in the storage section (41) as the operation data, calculates the predicted production volume by using the changed number of the winding units (10).

7. The production volume simulation apparatus (40) as claimed in any one of Claims 1 to 6, wherein
the removed yarn defect input receiving section (45) is configured to receive a changed simulation time as the simulatable item, wherein
the predicted production volume calculating section (42),
when the removed yarn defect input receiving section (45) receives the changed simulation time, calculates the predicted production volume of the packages (P) formed from a current point in time until the changed simulation time elapses, and
when the removed yarn defect input receiving section (45) does not receive the changed simulation time, calculates the predicted production volume of the packages (P) formed from the current point in time until a preset predetermined time elapses.

8. The production volume simulation apparatus (40) as claimed in any one of Claims 1 to 7, wherein
the predicted production volume calculating section (42), when the removed yarn defect input receiving section (45) receives the changed number of removed yarn defects, calculates a machine efficiency for simulation based on the changed number of removed yarn defects, and calculates the predicted production volume based on the machine efficiency for simulation and the winding speed for simulation.

9. The production volume simulation apparatus (40) as claimed in Claim 8, wherein
the predicted production volume calculating section (42) calculates the machine efficiency for simulation such that the machine efficiency for simulation decreases as the number of removed yarn defects increases.

10. A predicted production volume calculation method implemented by a production volume simulation apparatus (40) provided corresponding to a yarn winding machine (1) equipped with a plurality of winding units (10) each having a yarn feeding device (11) that supplies a yarn (Y), a winding device (16) that winds the yarn (Y) supplied from the yarn feeding device (11) to form a package (P), and a yarn defect detecting device (15) that detects at a location between the yarn feeding device (11) and the winding device (16) a yarn defect that is a defective portion included in the yarn (Y) and determines whether to remove the yarn defect based on a set clearing condition, comprising:
storing operation data of the winding units (10);
calculating a predicted production volume of the package (P) formed by the winding units (10) by using the operation data stored at the storing; and
receiving a changed number of removed yarn defects as a simulatable item, wherein
the calculating a predicted production volume includes calculating a winding speed for simulation and calculating a predicted production volume that are executed after receiving the changed number of removed yarn defects at the receiving a changed number of removed yarn defects, wherein
the calculating a winding speed for simulation includes calculating the winding speed for simulation based on the changed number of removed yarn defects, and
the calculating a predicted production volume includes calculating the predicted production volume based on the winding speed for simulation calculated at the calculating a winding speed for simulation.

11. The predicted production volume calculation method as claimed in Claim 10, further comprising:
receiving a changed clearing condition as the simulatable item; and
calculating a predicted removal number based on the changed clearing condition received at the receiving a changed clearing condition and yarn defect data that is one of the operation data stored at the storing, wherein
the receiving a changed number of removed yarn defects includes, upon receiving the changed clearing condition at the receiving a changed clearing condition, receiving the predicted removal number calculated at the calculating a predicted removal number as the changed number of removed yarn defects.

## Patentansprüche

1. Einrichtung zur Simulation des Produktionsvolumens (40), die entsprechend einer Garnwickelmaschine (1) bereitgestellt wird, die mit einer Vielzahl von Wickeleinheiten (10) ausgerüstet ist, die jeweils eine Garnzufuhrvorrichtung (11), die ein Garn (Y) zuführt, eine Wickelvorrichtung (16), die das von der Garnzufuhrvorrichtung (11) zugeführte Garn (Y) zum Bilden eines Wickelkörpers (P) wickelt, und eine Garndefektdetektionsvorrichtung (15), die an einer Stelle zwischen der Garnzufuhrvorrichtung (11) und der Wickelvorrichtung (16) einen Garndefekt detektiert, bei dem es sich um einen fehlerhaften Abschnitt handelt, der in dem Garn (Y) enthalten ist, und basierend auf einer eingestellten Beseitigungsbedingung bestimmt, ob der Garndefekt entfernt wird, aufweisen, umfassend:
einen Speicherabschnitt (41), der darin Betriebsdaten der Wickeleinheiten (10) speichert;
einen Abschnitt zum Berechnen des vorhergesagten Produktionsvolumens (42), der ein vorhergesagtes Produktionsvolumen der durch die Wickeleinheiten (10) gebildeten Wickelkörper (P) durch Verwenden der in dem Speicherabschnitt (41) gespeicherten Betriebsdaten berechnet; und
einen Empfangsabschnitt für die Eingabe entfernter Garndefekte (45), der eine geänderte Anzahl entfernter Garndefekte als ein simulierbares Element empfängt,
wobei der Abschnitt zum Berechnen des vorhergesagten Produktionsvolumens (42), wenn der Empfangsabschnitt für die Eingabe entfernter Garndefekte (45) die geänderte Anzahl entfernter Garndefekte empfängt, eine Wickelgeschwindigkeit zur Simulation basierend auf der geänderten Anzahl entfernter Garndefekte berechnet und das vorhergesagte Produktionsvolumen basierend auf der berechneten Wickelgeschwindigkeit zur Simulation berechnet.

2. Einrichtung zur Simulation des Produktionsvolumens (40) nach Anspruch 1, wobei der Abschnitt zum Berechnen des vorhergesagten Produktionsvolumens (42) die Wickelgeschwindigkeit zur Simulation derart berechnet, dass die Wickelgeschwindigkeit zur Simulation langsamer wird, wenn die Anzahl entfernter Garndefekte zunimmt.

3. Einrichtung zur Simulation des Produktionsvolumens (40) nach Anspruch 2, wobei
eine eingestellte Wickelgeschwindigkeit, die als eine Sollwickelbedingung eingestellt ist, in dem Speicherabschnitt (41) als eines der Betriebsdaten gespeichert ist, und
der Abschnitt zum Berechnen des vorhergesagten Produktionsvolumens (42) einen numerischen Wert, der von einem numerischen Wert der eingestellten Wickelgeschwindigkeit, die in dem Speicherabschnitt (41) gespeichert ist, verschieden ist, als die Wickelgeschwindigkeit zur Simulation berechnet.

4. Einrichtung zur Simulation des Produktionsvolumens (40) nach Anspruch 2 oder 3, wobei
der Speicherabschnitt (41) darin eine mathematische Formel zum Berechnen der Wickelgeschwindigkeit zur Simulation derart speichert, dass die Wickelgeschwindigkeit zur Simulation langsamer wird, wenn die Anzahl entfernter Garndefekte zunimmt, und
der Abschnitt zum Berechnen des vorhergesagten Produktionsvolumens (42) die Wickelgeschwindigkeit zur Simulation basierend auf der in dem Speicherabschnitt (41) gespeicherten mathematischen Formel berechnet.

5. Einrichtung zur Simulation des Produktionsvolumens (40) nach einem der Ansprüche 1 bis 4, weiter umfassend:
einen Empfangsabschnitt für die Eingabe einer Beseitigungsbedingung (55), der eine geänderte Beseitigungsbedingung als das simulierbare Element empfängt; und
einen Abschnitt zum Berechnen der vorhergesagten Entfernungsanzahl (52), die, wenn der Empfangsabschnitt für die Eingabe einer Beseitigungsbedingung (55) die geänderte Beseitigungsbedingung empfängt, eine vorhergesagte Entfernungsanzahl der Garndefekte basierend auf der geänderten Beseitigungsbedingung berechnet, wobei
der Empfangsabschnitt für die Eingabe entfernter Garndefekte (45) die durch den Abschnitt zum Berechnen der vorhergesagten Entfernungsanzahl (52) berechnete vorhergesagte Entfernungsanzahl als die geänderte Anzahl entfernter Garndefekte empfängt und
der Abschnitt zum Berechnen des vorhergesagten Produktionsvolumens (42), wenn der Empfangsabschnitt für die Eingabe entfernter Garndefekte (45) die durch den Abschnitt zum Berechnen der vorhergesagten Entfernungsanzahl (52) berechnete vorhergesagte Entfernungsanzahl als die geänderte Anzahl entfernter Garndefekte empfängt, die Wickelgeschwindigkeit zur Simulation basierend auf der geänderten Anzahl entfernter Garndefekte berechnet und das vorhergesagte Produktionsvolumen basierend auf der Wickelgeschwindigkeit zur Simulation berechnet.

6. Einrichtung zur Simulation des Produktionsvolumens (40) nach einem der Ansprüche 1 bis 5, wobei
der Empfangsabschnitt für die Eingabe entfernter Garndefekte (45) zum Empfangen, als das simulierbare Element, einer geänderten Anzahl von Wickeleinheiten ausgelegt ist, wobei
der Abschnitt zum Berechnen des vorhergesagten Produktionsvolumens (42), wenn der Empfangsabschnitt für die Eingabe entfernter Garndefekte (45) die geänderte Anzahl der Wickeleinheiten (10) empfängt, anstelle des Berechnens des vorhergesagten Produktionsvolumens durch Verwenden der in dem Speicherabschnitt (41) gespeicherten Anzahl der Wickeleinheiten (10) als die Betriebsdaten, das vorhergesagte Produktionsvolumen durch Verwenden der geänderten Anzahl der Wickeleinheiten (10) berechnet.

7. Einrichtung zur Simulation des Produktionsvolumens (40) nach einem der Ansprüche 1 bis 6, wobei
der Empfangsabschnitt für die Eingabe entfernter Garndefekte (45) zum Empfangen einer geänderten Simulationszeit als das simulierbare Element ausgelegt ist, wobei
der Abschnitt zum Berechnen des vorhergesagten Produktionsvolumens (42),
wenn der Empfangsabschnitt für die Eingabe entfernter Garndefekte (45) die geänderte Simulationszeit empfängt, das vorhergesagte Produktionsvolumen der Wickelkörper (P), das von einem aktuellen Zeitpunkt bis zum Ablaufen der geänderten Simulationszeit gebildet wird, berechnet und
wenn der Empfangsabschnitt für die Eingabe entfernter Garndefekte (45) die geänderte Simulationszeit nicht empfängt, das vorhergesagte Produktionsvolumen der Wickelkörper (P), das von dem aktuellen Zeitpunkt bis zum Ablaufen einer voreingestellten vorgegebenen Zeit gebildet wird, berechnet.

8. Einrichtung zur Simulation des Produktionsvolumens (40) nach einem der Ansprüche 1 bis 7, wobei
der Abschnitt zum Berechnen des vorhergesagten Produktionsvolumens (42), wenn der Empfangsabschnitt für die Eingabe entfernter Garndefekte (45) die geänderte Anzahl entfernter Garndefekte empfängt, eine Maschineneffizienz zur Simulation basierend auf der geänderten Anzahl entfernter Garndefekte berechnet und das vorhergesagte Produktionsvolumen basierend auf der Maschineneffizienz zur Simulation und der Wickelgeschwindigkeit zur Simulation berechnet.

9. Einrichtung zur Simulation des Produktionsvolumens (40) nach Anspruch 8, wobei
der Abschnitt zum Berechnen des vorhergesagten Produktionsvolumens (42) die Maschineneffizienz zur Simulation derart berechnet, dass die Maschineneffizienz zur Simulation abnimmt, wenn die Anzahl entfernter Garndefekte zunimmt.

10. Verfahren zur Berechnung des vorhergesagten Produktionsvolumens, das durch eine Einrichtung zur Simulation des Produktionsvolumens (40) implementiert wird, die entsprechend einer Garnwickelmaschine (1) bereitgestellt wird, die mit einer Vielzahl von Wickeleinheiten (10) ausgerüstet ist, die jeweils eine Garnzufuhrvorrichtung (11), die ein Garn (Y) zuführt, eine Wickelvorrichtung (16), die das von der Garnzufuhrvorrichtung (11) zugeführte Garn (Y) zum Bilden eines Wickelkörpers (P) wickelt, und eine Garndefektdetektionsvorrichtung (15), die an einer Stelle zwischen der Garnzufuhrvorrichtung (11) und der Wickelvorrichtung (16) einen Garndefekt detektiert, bei dem es sich um einen fehlerhaften Abschnitt handelt, der in dem Garn (Y) enthalten ist, und basierend auf einer eingestellten Beseitigungsbedingung bestimmt, ob der Garndefekt entfernt wird, aufweisen, umfassend:
Speichern von Betriebsdaten der Wickeleinheiten (10);
Berechnen eines vorhergesagten Produktionsvolumens der durch die Wickeleinheiten (10) gebildeten Wickelkörper (P) durch Verwenden der beim Speichern gespeicherten Betriebsdaten und
Empfangen einer geänderten Anzahl entfernter Garndefekte als ein simulierbares Element, wobei
das Berechnen eines vorhergesagten Produktionsvolumens ein Berechnen einer Wickelgeschwindigkeit zur Simulation und ein Berechnen eines vorhergesagten Produktionsvolumens einschließt, die nach dem Empfangen der geänderten Anzahl entfernter Garndefekte beim Empfangen einer geänderten Anzahl entfernter Garndefekte ausgeführt werden, wobei
das Berechnen einer Wickelgeschwindigkeit zur Simulation ein Berechnen der Wickelgeschwindigkeit zur Simulation basierend auf der geänderten Anzahl entfernter Garndefekte einschließt und
das Berechnen eines vorhergesagten Produktionsvolumens ein Berechnen des vorhergesagten Produktionsvolumens basierend auf der Wickelgeschwindigkeit zur Simulation, die beim Berechnen einer Wickelgeschwindigkeit zur Simulation berechnet wird, einschließt.

11. Verfahren zur Berechnung des vorhergesagten Produktionsvolumens nach Anspruch 10, weiter umfassend:
Empfangen einer geänderten Beseitigungsbedingung als das simulierbare Element und
Berechnen einer vorhergesagten Entfernungsanzahl basierend auf der geänderten Beseitigungsbedingung, die beim Empfangen einer geänderten Beseitigungsbedingung empfangen wird, und Garndefektdaten, die eine der Betriebsdaten sind, die beim Speichern gespeichert werden, wobei
das Empfangen einer geänderten Anzahl entfernter Garndefekte, nach dem Empfangen der geänderten Beseitigungsbedingung beim Empfangen einer geänderten Beseitigungsbedingung, ein Empfangen der vorhergesagten Entfernungsanzahl, die beim Berechnen einer vorhergesagten Entfernungsanzahl berechnet wird, als die geänderte Anzahl entfernter Garndefekte einschließt.

## Revendications

1. Appareil de simulation de volume de production (40) disposé en correspondance avec une machine de bobinage de fil (1) équipée d'une pluralité d'unités de bobinage (10) présentant chacune un dispositif d'alimentation en fil (11) qui fournit un fil (Y), un dispositif de bobinage (16) qui assure le bobinage du fil (Y) fourni à partir du dispositif d'alimentation en fil (11) pour former un enroulement (P), et un dispositif de détection de défaut de fil (15) qui détecte à un emplacement entre le dispositif d'alimentation en fil (11) et le dispositif de bobinage (16) un défaut de fil qui est une partie défectueuse incluse dans le fil (Y) et détermine s'il faut ou non éliminer le défaut de fil sur la base d'une condition de purge définie, comprenant :
une section de stockage (41) qui stocke en son sein des données de fonctionnement des unités de bobinage (10) ;
une section de calcul de volume de production prévu (42) qui calcule un volume de production prévu des enroulements (P) formés par les unités de bobinage (10) en utilisant les données de fonctionnement stockées dans la section de stockage (41) ; et
une section de réception d'entrée de défauts de fil éliminés (45) qui reçoit un nombre modifié de défauts de fil éliminés en tant qu'un élément simulable,
dans lequel la section de calcul de volume de production prévu (42), lorsque la section de réception d'entrée de défauts de fil éliminés (45) reçoit le nombre modifié de défauts de fil éliminés, calcule une vitesse de bobinage pour simulation sur la base du nombre modifié de défauts de fil éliminés et calcule le volume de production prévu sur la base de la vitesse de bobinage calculée pour simulation.

2. Appareil de simulation de volume de production (40) selon la revendication 1, dans lequel la section de calcul de volume de production prévu (42) calcule la vitesse de bobinage pour simulation de telle sorte que la vitesse de bobinage pour simulation devient plus lente au fur et à mesure que le nombre de défauts de fil éliminés augmente.

3. Appareil de simulation de volume de production (40) selon la revendication 2, dans lequel
une vitesse définie de bobinage définie en tant qu'une condition de bobinage cible est stockée dans la section de stockage (41) en tant qu'une des données de fonctionnement, et
la section de calcul de volume de production prévu (42) calcule une valeur numérique différente d'une valeur numérique de la vitesse définie de bobinage stockée dans la section de stockage (41) en tant que la vitesse de bobinage pour simulation.

4. Appareil de stimulation de volume de production (40) selon la revendication 2 ou 3, dans lequel
la section de stockage (41) stocke en son sein une formule mathématique pour calculer la vitesse de bobinage pour simulation de telle sorte que la vitesse de bobinage pour simulation devient plus lente au fur et à mesure que le nombre de défauts de fil éliminés augmente, et
la section de calcul de volume de production prévu (42) calcule la vitesse de bobinage pour simulation sur la base de la formule mathématique stockée dans la section de stockage (41).

5. Appareil de simulation de volume de production (40) selon l'une quelconque des revendications 1 à 4, comprenant en outre :
une section de réception d'entrée de condition de purge (55) qui reçoit une condition de purge modifiée en tant que l'élément simulable ; et
une section de calcul de nombre d'éliminations prévu (52) qui calcule, lorsque la section d'entrée de condition de purge (55) reçoit la condition de purge modifiée, un nombre d'éliminations prévu des défauts de fil sur la base de la condition de purge modifiée, dans lequel
la section de réception d'entrée de défauts de fil éliminés (45) reçoit le nombre d'éliminations prévu calculé par la section de calcul de nombre d'éliminations prévu (52) en tant que le nombre modifié de défauts de fil éliminés, et
la section de calcul de volume de production prévu (42), lorsque la section de réception d'entrée de défauts de fil éliminés (45) reçoit le nombre d'éliminations prévu calculé par la section de calcul de nombre d'éliminations prévu (52) en tant que le nombre modifié de défauts de fil éliminés, calcule la vitesse de bobinage pour simulation sur la base du nombre modifié de défauts de fil éliminés et calcule le volume de production prévu sur la base de la vitesse de bobinage pour simulation.

6. Appareil de simulation de volume de production (40) selon l'une quelconque des revendications 1 à 5, dans lequel,
la section de réception d'entrée de défauts de fil éliminés (45) est configurée pour recevoir, en tant que l'élément simulable, un nombre modifié d'unités de bobinage, dans lequel
la section de calcul de volume de production prévu (42), lorsque la section de réception d'entrée de défauts de fil éliminés (45) reçoit le nombre modifié des unités de bobinage (10), à la place de calculer le volume de production prévu en utilisant le nombre des unités de bobinage (10) stocké dans la section de stockage (41) en tant que les données de fonctionnement, calcule le volume de production prévu en utilisant le nombre modifié des unités de bobinage (10).

7. Appareil de simulation de volume de production (40) selon l'une quelconque des revendications 1 à 6, dans lequel
la section de réception d'entrée de défauts de fil éliminés (45) est configurée pour recevoir un temps de simulation modifié en tant que l'élément simulable, dans lequel
la section de calcul de volume de production prévu (42),
lorsque la section de réception d'entrée de défauts de fil éliminés (45) reçoit le temps de simulation modifié, calcule le volume de production prévu des enroulements (P) formés à partir d'un instant actuel jusqu'à ce que le temps de simulation modifié s'écoule, et
lorsque la section de réception d'entrée de défauts de fil éliminés (45) ne reçoit pas le temps de simulation modifié, calcule le volume de production prévu des enroulements (P) formés à partir de l'instant actuel jusqu'à ce qu'un temps prédéterminé prédéfini s'écoule.

8. Appareil de simulation de volume de production (40) selon l'une quelconque des revendications 1 à 7, dans lequel
la section de calcul de volume de production prévu (42), lorsque la section de réception d'entrée de défauts de fil éliminés (45) reçoit le nombre modifié de défauts de fil éliminés, calcule un rendement de machine pour simulation sur la base du nombre modifié de défauts de fil éliminés, et calcule le volume de production prévu sur la base du rendement machine pour simulation et de la vitesse de bobinage pour simulation.

9. Appareil de simulation de volume de production (40) selon la revendication 8, dans lequel
la section de calcul de volume de production prévu (42) calcule le rendement machine pour simulation de telle sorte que le rendement machine pour simulation diminue au fur et à mesure que le nombre de défauts de fil éliminés augmente.

10. Procédé de calcul de volume de production prévu mis en œuvre par un appareil de simulation de volume de production (40) disposé en correspondance avec une machine de bobinage de fil (1) équipée d'une pluralité d'unités de bobinage (10) présentant chacune un dispositif d'alimentation en fil (11) qui fournit un fil (Y), un dispositif de bobinage (16) qui assure le bobinage du fil (Y) fourni à partir du dispositif d'alimentation en fil (11) pour former un enroulement (P), et un dispositif de détection de défaut de fil (15) qui détecte à un emplacement entre le dispositif d'alimentation en fil (11) et le dispositif de bobinage (16) un défaut de fil qui est une partie défectueuse incluse dans le fil (Y) et détermine s'il faut éliminer ou pas le défaut de fil sur la base d'une condition de purge définie, comprenant :
le stockage de données de fonctionnement des unités de bobinage (10) ;
le calcul d'un volume de production prévu de l'enroulement (P) formé par les unités de bobinage (10) en utilisant les données de fonctionnement stockées lors du stockage ; et
la réception d'un nombre modifié de défauts de fil éliminés en tant qu'un élément simulable, dans lequel
le calcul d'un volume de production prévu inclut le calcul d'une vitesse de bobinage pour simulation et le calcul d'un volume de production prévu qui sont exécutés après réception du nombre modifié de défauts de fil éliminés lors de la réception d'un nombre modifié de défauts de fil éliminés, dans lequel
le calcul d'une vitesse de bobinage pour simulation inclut le calcul de la vitesse de bobinage pour simulation sur la base du nombre modifié de défauts de fil éliminés, et
le calcul d'un volume de production prévu inclut le calcul du volume de production prévu sur la base de la vitesse de bobinage pour simulation calculée lors du calcul d'une vitesse de bobinage pour simulation.

11. Procédé de calcul de volume de production prévu selon la revendication 10, comprenant en outre :
la réception d'une condition de purge modifiée en tant que l'élément simulable ; et
le calcul d'un nombre d'éliminations prévu sur la base de la condition de purge modifiée reçue lors de la réception d'une condition de purge modifiée et de données de défaut de fil qui sont une des données de fonctionnement stockées lors du stockage, dans lequel
la réception d'un nombre modifié de défauts de fil éliminés inclut, à réception de la condition de purge modifiée lors de la réception d'une condition de purge modifiée, la réception du nombre d'éliminations prévu calculé lors du calcul d'un nombre d'éliminations prévu en tant que le nombre modifié de défauts de fil éliminés.
